# EUROPEAN PATENT APPLICATION

(11) **EP 1 914 851 A1**
(43) Date of publication of application: **23.04.2008**
(21) Application number: 07118474.1
(22) Date of filing: 15.10.2007
(51) Int. Cl.: H02B 1/015, H01H 13/04, G06F 1/16, B24B 51/00

(54) **Apparatus and method for managing and controlling a machine tool**

(30) Priority: 16.10.2006 IT MO20060331
(71) Applicant: SCM GROUP S.p.A., 47900 Rimini (IT)
(72) Inventor: Tondelli, Enrico, 47900 Rimini (RN) (IT); Ferrari, Adriano, 47827 Villa Verucchio (RN) (IT)
(74) Representative: Crugnola, Pietro

(57) **Abstract**

An apparatus for managing and controlling an operating machine (20) for machining elements (40), in particular a sanding machine, comprises processing means (2) for driving and controlling said machine (20) and control panel means (3) for inserting and/or modifying and/or displaying data and/or operating parameters of said machine (20), said control panel means (3) comprising supporting means (9) arranged for receiving and supporting said processing means (2); a method for managing and controlling an operating machine (20) for machining elements (40), in particular a sanding machine, by means of the control apparatus (1), comprising inserting and/or exchanging with said machine (20) data and/or adjusting and/or operating parameters by means of said control apparatus (1) of said machine (20), said inserting and/or exchanging comprising executing operating procedures (110, 115, 120, 125, 130, 140, 150, 160, 180) that are activatable and/or manageable through key means (11) of control panel means (3) of said apparatus (1).

## Description

The present invention relates to an apparatus and a method for managing and controlling an operating machine, in particular a sanding machine for machining elements, for example panels, frames made of wood or similar material, or sheet metal, metal alloy profiled sections.

A calibrating sanding machine typically comprises a horizontal conveyor belt, suitable for supporting and moving an element or workpiece to be machined through a series of successive operational units. The height of the conveyor belt, which acts as a work surface, is adjustable with respect to the operational units to enable a machining thickness to be calibrated, i.e. the thickness of the material to be removed by sanding.

Pressure bars are provided that maintain the element pressed against the belt, in particular during machinings. In addition to the latter, an aspirator device can be connected to the conveyor belt to maintain the element adhering more closely and locked on the belt during the transferring and transit of the element through the operational units.

The sanding machine may comprise one or more calibrating/sanding units with roller and/or pad longitudinal abrasive belts, one or more sanding units with transverse abrasive belts, and one or more roller sanding/buffing/structuring units, the number and the type of said units being a function of the machinings to be performed on the elements and of the productivity required of the machine.

In transverse sanding units, the abrasive belt, which forms a closed loop, is rotated in a direction that is orthogonal to the movement direction of the element and is maintained in contact with the surface of the latter by means of a movable buffer or pad.

In longitudinal sanding units the abrasive belt, which still forms a closed loop, is rotated in a direction parallel to the movement direction of the element, in the same or opposite direction, and is maintained in contact with the surface of the element by means of a roller or a pad or both. The pads of the transverse and longitudinal sanding units may be of the so-called "sectioned" type, i.e. they may comprise a plurality of aligned buffers, driven by respective actuators so as to make only defined portions of the abrasive belt abut on the surface to be machined.

A reading device, placed upstream of the sanding units, detects the dimensions and the shape of the element (for example a continuous panel or a panel with a window) to drive only actuators that abut on the surface to be polished. This enables machining to be optimised and, for example, the edges of the element to be protected from excessive and/or undesired sanding.

The machine further comprises fixed and/or oscillating blowing means for cleaning abrasive belts and the conveyor belt, located downstream of the calibrating/sanding units and of the cleaning/buffing/structuring units. The machine also includes a blowing unit for cleaning the element.

The sanding machine may have operational units arranged above the conveyor belt to machine an upper surface of the element (so-called "upper machine"), or operational units arranged below the belt to act on a lower surface of the element (so-called "lower" machine).

So-called "double" machines also exist that comprise operational units arranged on both sides of the conveyor belt to calibrate/polish both opposite surfaces of the element.

The current management and control apparatuses for such sanding machines comprise an industrial computer or PLC (Programmable Logic Controller) that controls the machine, processing the analogue and/or digital signals coming from sensors and/or directed to actuators and motors of the machine.

The PLC executes a programme for running the process and operation of the machine resident in a memory. The programme is transferred to the PLC and/or modified by means of a computer PC that is connectable to the PLC and is provided with suitable specialised software.

During operation the PLC colloquia through electronic I/O cards with the devices and apparatuses of the machine such as sensors, motors, actuators, valves, etc, transferring data and commands.

An interface device is provided for enabling an operator to interact with the PLC so as to input data, activate and/or stop operating means of the machine, modify and/or display settings and operating parameters relating to the operation of the machine and/or to the process being executed.

The interface device typically consists of a control panel, a so-called operator machine that comprises a plurality of pushbuttons, switches, dials and a display screen.

A drawback of these control apparatuses consists of the fact that for each type of machine, on the basis of the structure and composition of the operating means of the latter, a specific control panel has to be configured and devised. This increases the time and cost of devising and commissioning the control apparatus.

Further, in the case of sanding machines of large dimensions, for example provided with numerous calibrating/sanding machines, the control panel may become very complex and require considerable space on the machine for mounting, which is not always available. Further to this, the control panel is hardly ergonomic, is complicated and difficult for an operator to use, who has to perform manual procedures thereupon according to defined sequences.

These procedures, in addition to requiring significant expertise from the operator, may lead to errors and/or imprecisions such as to compromise the correct operation of the machine. A malfunction may, in fact, cause machinings and processes that are non-compliant and irregular and even damage and breakage of the operational units of the machine.

In certain cases, in addition, the control panel is not sufficient for modifying settings and operating parameters of the PLC, but a processor or external computer has to be connected to the latter.

Control apparatuses are known comprising an electronic interface processing unit, for example a personal computer, connected to the PLC of the machine and provided with a separate or integrated keyboard screen, for example in the case of touchscreens. Such apparatuses enable the operator to interact with the PLC in a rapid and easy manner, so as to manage and control the machine and the operational process. Nevertheless, they are very costly, as in addition to the cost of the interface unit, they require the development and implementation of suitable software programmes for managing and transferring data between said units and the PLC.

These apparatuses, especially if they incorporate touchscreen technology, further require specially attention and care in use as they are relatively fragile and delicate and may therefore be easily subject to breakage and faults.

An object of the present invention is to improve known apparatuses and methods for managing and controlling an operating machine, in particular a calibrating/sanding machine for machining elements made of wood or the like, or made of metal alloy.

Another object is to obtain an apparatus that enables the operation of an operating machine to be managed and controlled completely and at the same time constitutes a versatile and flexible operational interface that is easy to use, intuitive and efficient.

A further object is to devise a control apparatus that is cheap to make and has a tough and reliable structure.

Still another object is to obtain an apparatus and a method that enable operating procedures to be conducted in an automatic and guided manner to drive, adjust and configure the machine and corresponding work processes.

Still a further object is to obtain an apparatus and a method that can be used on different types of sanding machines, with minimal adapting and configuring interventions.

In a first aspect of the invention there is provided an apparatus for managing and controlling an operating machine for machining elements, in particular a sanding machine, comprising processing means for driving and controlling said machine and control panel means for inserting and/or modifying and/or displaying data and/or operating parameters of said machine, characterised in that said control panel means comprises supporting means arranged for receiving and supporting said processing means.

In a second aspect of the invention there is provided a method for managing and controlling an operating machine for machining elements, in particular a sanding machine, by means of the control apparatus defined above, comprising inserting and/or exchanging with said operating machine data and/or adjusting and/or operating parameters by means of said control apparatus, said inserting and/or exchanging comprising executing operating procedures that are activatable and/or manageable through key means of control panel means of said apparatus.

Owing to the first and second aspect of the invention it is possible to obtain an apparatus and a method allowing to operate and to control in a complete manner the operation of an operating machine and, at the same time, to insert and/or exchange with said machine data and/or adjusting and/or operating parameters in an easy, fast and efficient manner.

The control apparatus in fact comprises in a single unit both processing means, suitable for commanding and managing operating means of the machine, and control panel means, which acts as an operator interface. Said control panel means has, in particular, a switchboard provided with a plurality of keys by means of which it is possible to execute all the operating procedures required for adjusting and/or configuring the machine and for managing the operation thereof. The keys, divided into groups, enable the operating procedures to be selected and activated and values and settings of said operating parameters to be inserted and/or modified. Display means of the control panel means enables the operator to view data and information and monitor the operation of the machine.

The control apparatus is, further, particularly tough as the control panel means has a support structure made of metal alloy and is covered by a membrane of plastics that protects the keys during use, for example from collision, dust, dirt, etc.

This covering membrane is also provided with graphic representations or figures where there are keys, and with a pocket for housing a card provided with figures showing schematically the operating means located on the machine. The card is arranged in the pocket so that the figures are superimposed on respective keys. The graphic representations on the card and on the membrane enable the keys to be operated to control the machine to be identified, indicating at the same time the function thereof. In this way, it is sufficient to replace the card and/or membrane to set up the control apparatus for use on different types of sanding machines.

The invention can be better understood and implemented with reference to the attached drawings that illustrate a nonlimiting embodiment thereof by way of example, in which:
Figure 1 is a schematic axonometric view of the control apparatus of the invention;
Figure 2 is a partially sectioned top view of the apparatus in Figure 1;

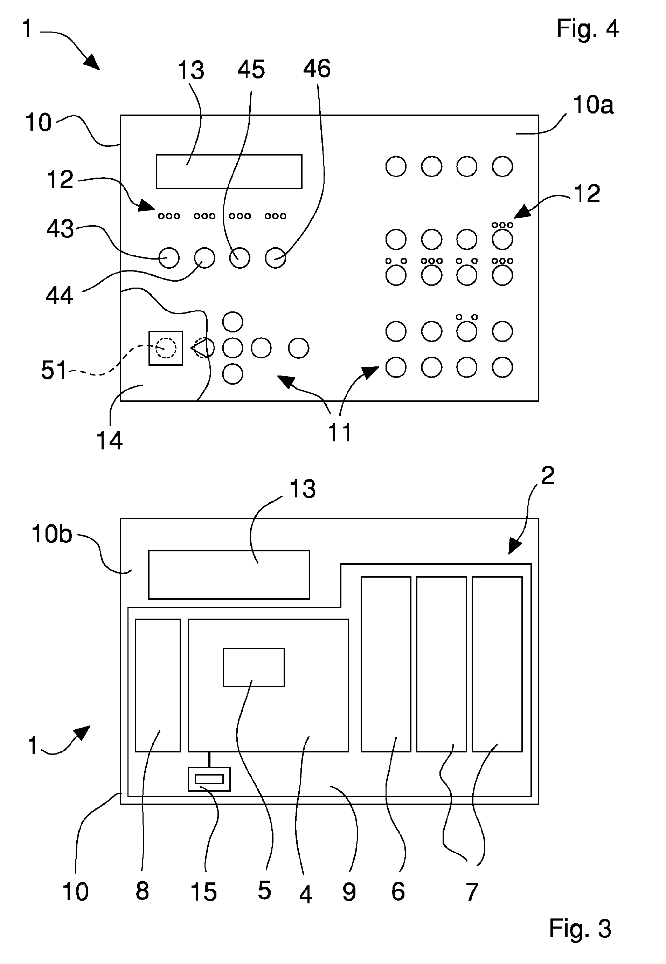

Figure 3 is a schematic rear view of the apparatus in Figure 1;
Figure 4 is a front view of the apparatus in Figure 1 partially devoid of membrane means;
Figure 5 is a perspective schematic view of the apparatus in Figure 1 in association with a calibrating sanding machine;
Figure 6 is a front schematic view of the sanding machine in Figure 5;
Figure 7 is a front view of the apparatus in Figure 1, showing control panel means;
Figures 8A-8F are schematic views of display means of the apparatus 1 in various work conditions;
Figure 9 is a block diagram that illustrates the method of the invention for managing and controlling a sanding machine. With reference to Figures 1 to 7, there is illustrated an apparatus 1 for managing and controlling an operating machine 20, in particular a calibrating sanding machine, comprising processing means 2 for commanding and driving said machine 20 and control panel means 3, for inserting, modifying, displaying data, settings and operating parameters necessary for adjusting and driving said machine.

The control panel means 3 comprises supporting means 9 arranged for receiving and supporting the processing means 2. The latter is configured for executing driving programmes of the machine 20 for running the work processes in an automatic manner. In this way, the processing means 2 is comparable to an industrial computer or a PLC programmable logic controller.

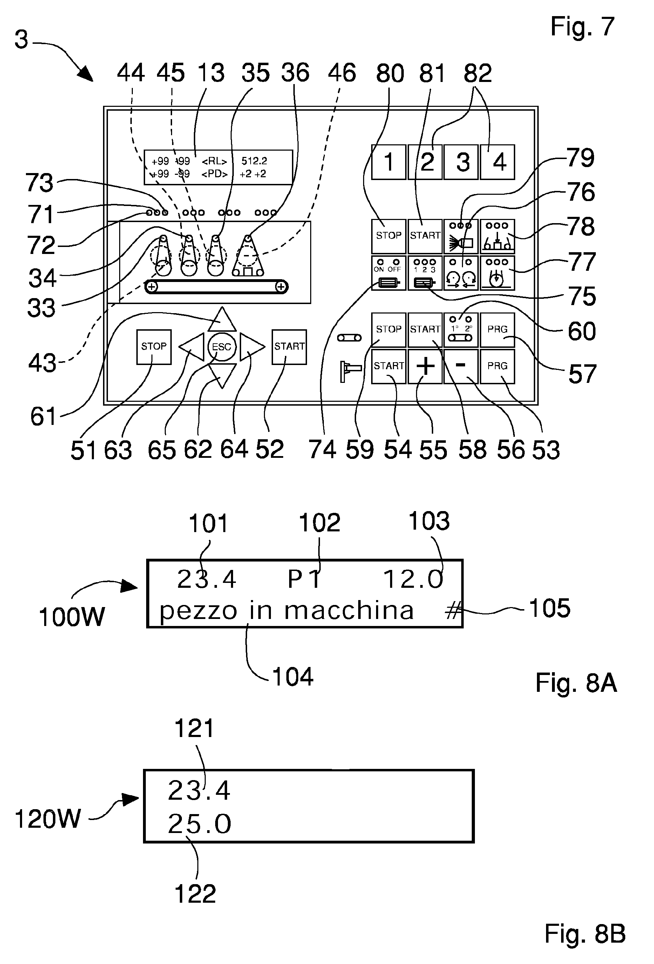

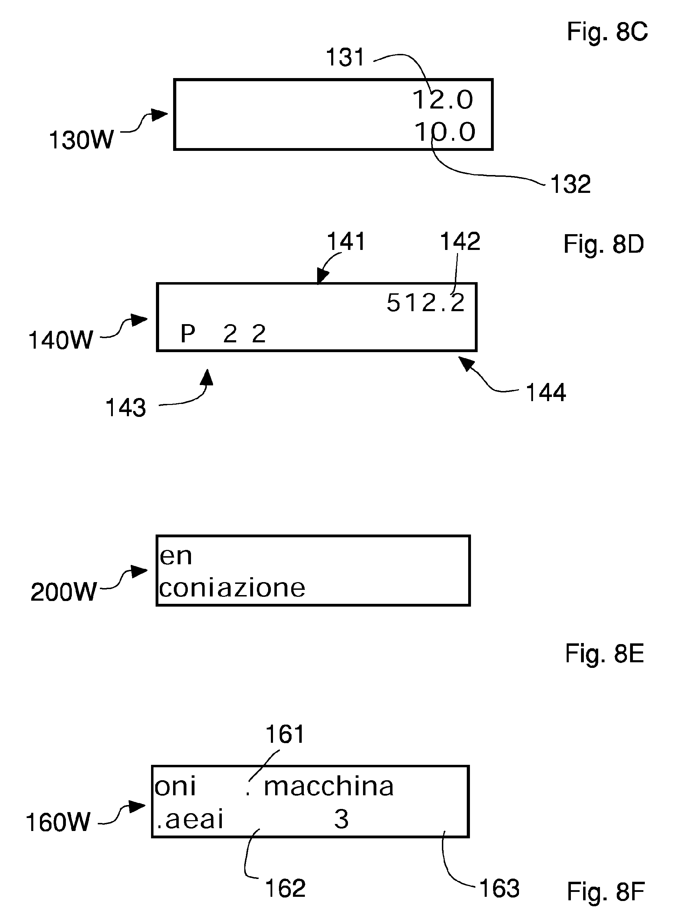

The control panel means 3 comprises a switchboard 10 provided on a front side 10a of a plurality of keys 11 a cupola, luminous indicators (LEDs) 12, and with an alphanumeric liquid crystal display screen 13. The latter is, for example, of the type with two sixteen-character lines, and enables settings, adjustments and operational statuses of the machine 20 (Figure 8A) to be displayed.

The switchboard 10 comprises an external support structure made of metal alloy, for example an aluminium alloy, that has advantages of particular resistance and toughness. To this supporting structure, on a rear side 10b opposite the front side 10a of the switchboard 10, the supporting means 9 is fixed, which is of the type normally used for receiving and supporting electronic components such as electronic boards, connections, peripherals and other devices.

The front side 10a of the switchboard 10 is completely covered by a membrane 14 made of plastics, for example polyesters, which is provided with graphic representations or figures where the keys 11 are located.

The membrane 14 further comprises a pocket 15 suitable for hosting in a removable manner a card 16 provided with a set of figures 33, 34, 35, 36 schematically showing respective operating means located on the machine 20. The card is arranged in the pocket 15 such that the Figures 33, 34, 35, 36 of the operating means are exactly superimposed on respective selecting keys for selecting operating means 43, 44, 45, 46 (Figure 7).

The membrane 14, in addition to protecting the front side 10a of the switchboard 10 exposed to the external environment and to interaction with the operator, enables the control panel 3 to be configured according to specific needs, namely in function of a structure and conformation of the machine 20. The graphic representations on said membrane 14 in fact enable the keys 11 to be driven for controlling of the machine to be identified, at the same time indicating the function thereof at the same time. In this way it is sufficient to replace the card 16 and/or the entire membrane 14 to set up the control apparatus 1 for different sanding machines.

On a rear side 10b the supporting means 9 enables the processing means 2 to be fixed that comprises a CPU supporting electronic board 4 arranged for supporting a central processing unit or CPU 5, i.e. a microprocessor or electronic microcontroller, and a plurality of electronic expansion boards 6, 7, 8.

The supporting means 9 comprises housings or seats suitable for receiving the aforesaid electronic boards 4, 6, 7, 8, removably fixed via suitable fixing means 9 such as screws and/or tightening clamps.

The electronic expansion boards 6, 7, 8 comprise one or more electronic I/O boards 6, 7, for the input and/or the output of analogue and/or digital signals, and a support electronic expansion board 8 for connecting the CPU 5 to said control panel means 3.

The CPU supporting board 4 is of the synchronous serial type and comprises specific communication lines for electronic I/O boards and a plurality of communication connections/interfaces for transmitting data to devices and external peripherals such as, for example, an insulated CAN channel with serial port of RS-232 type, two insulated synchronous serial BUS.

The CPU supporting board 4 further comprises, specific connections for the support board 8 and an auxiliary connector 15, for example of the RS-232 serial type for connecting to an external backup or reserve device, for example a mass memory device based on "Flash" memory cells (pen-drive).

The electronic expansion boards comprise in particular, an analogue I/O electronic board 6 based on a non-smart logic with "shift-register", in communication with the CPU supporting board 4 by means of two connectors and provided with a plurality of analogue and digital outlets and with at least an analogue input for connecting to operating means of the machine. The analogue I/O expansion board 6 is further provided with a monodirectional encoder.

Two digital electronic I/O boards 7 are provided, each of which is based on a non-smart logic with "shift-register" and is provided with a plurality of digital inputs and outputs for connecting to operating means of the machine.

The support expansion board 8, in addition to supporting a plurality of LEDs that are not insertible into the membrane 14, enables the keys 11, the LED 12 and the screen 13 of the control panel means 3 to be connected to or interfaced with the CPU 5.

The CPU supporting board 4 and the expansion boards 6, 7, 8 are provided at the rear with dismantleable protection panels.

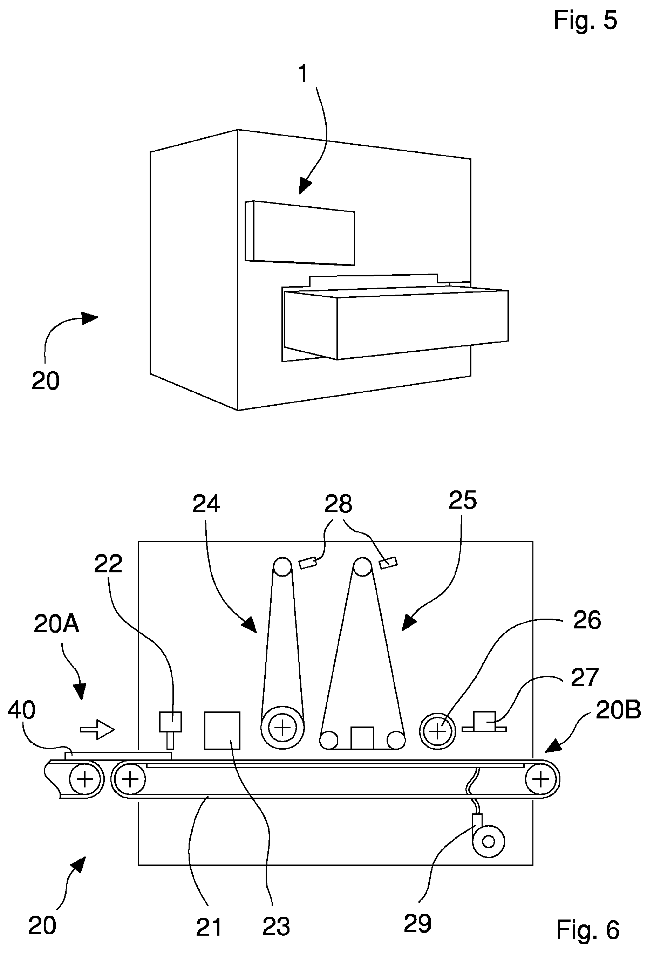

With particular reference to Figures 5 and 6, the apparatus 1 is suitable for managing and controlling an operating machine 20, in particular a calibrating sanding machine for machining elements of wood or similar material or for machining elements made of metal alloy, for example sheet metal or profiled sections.

The sanding machine 20 is provided, for example, with conveying means 21, comprising a closed loop movable belt or mat arranged for supporting and moving an element to be machined 40 through a plurality of operating means with a defined advance speed. Aspirator means 29 can be connected to the conveyor belt 21 to ensure, through aspiration, that the element 40 adheres to the latter.

The machine 20 comprises, at an inlet portion 20A thereof, reading means or a sectioned barrier 22, arranged for detecting the dimensions and the shape of the element 40 that is introduced into the machine 20. The reading means 22, comprises a plurality of aligned reading sectors that are selectively activated by the passage of the element 40.

Downstream of the reading means 22 there is provided one after the other first calibrating/sanding means 23 with an abrasive belt, transverse to a sectioned pad, second calibrating/sanding means 24, an abrasive belt, third longitudinal roller calibrating/sanding means 25 with an abrasive belt, with a sectioned pad, roller sanding /cleaning/buffing means 26, and blowing means 27, the latter arranged at an outlet portion 20B of the machine.

Fixed and/or oscillating further blowing means 28 is further provided at the second and third calibrating/sanding means for cleaning respective abrasive belts.

The illustrated machine 20 is of superior type but may comprise any greater and/or lesser number of operating means to machine one or both sides of the element 40.

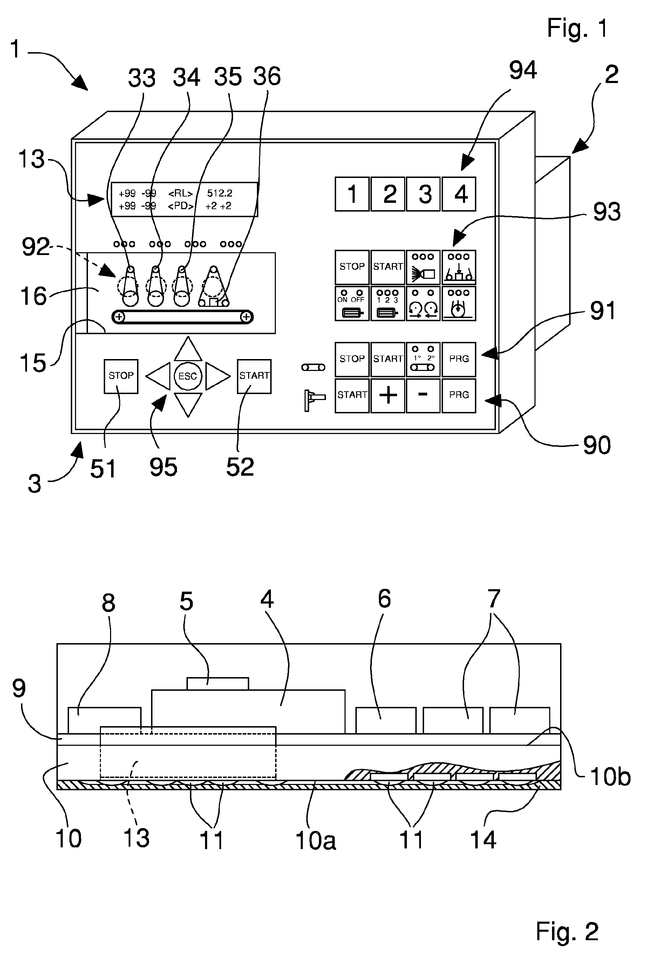

With reference to Figure 1, the switchboard 10, provided with a suitable membrane 14 and with a card 16, has a plurality of keys by means of which it is possible to execute operating procedures required to configure, adjust and activate the sanding machine 20.

In particular, the keys are suitably distributed and gathered in units 90, 91, 92, 93, 94, 95, each of which are arranged for performing on the machine 20 preset operating procedures, as disclosed in detail below in the description.

The switchboard 10 comprises a first key group 90 and a second key group 91 arranged for respectively adjusting a sanding thickness to be made on the element 40 to be machined and an advance speed of the conveying means 21.

A third key group 92 enables operating sanding means of the machine to be selected and activated.

A fourth key group 93 enables to operate on the selected operating means selected by the third key group.

A fifth key group 94 enables work programmes to be selected and/or stored for the operation of the machine.

A sixth key group 95, comprising a plurality of directional keys 61, 62, 63, 64, enables a cursor displayed on the screen 13 to move and/or the values of selected parameters to be varied. The directional keys 61, 62, 63, 64, together with an outlet key 65, also enable further operating procedures of the machine 20 to be selected and activated that are graphically displayable on the screen 13, as explained in greater detail below in the description.

When the control apparatus 1 starts up on the screen 13 of the control panel 3 a main page 100W appears in which a series of information is shown relating to functional parameters, settings, adjustments and the operational status of the machine 20 (Figure 8A). In particular, the main page 100W comprises a display 101 for configuring a set machining thickness, a display 102 of an active work programme, a display 103 of an advance speed set for the element, a display 104 of current operational status of the machine 20, a door-open warning display 105 on the machine.

The startup of the control apparatus 1 coincides with the startup of the machine 20 that is arranged in an initial status 100 that may or may not be indicated by the display 104 of the main page 100w, with a suitable message ("Machine ready").

The display 104 of the machine status beyond the initial status 100 may indicate the machining of an element ("Workpiece in machine"), the startup of the operating means ("Startup") or an active alarm ("Alarm").

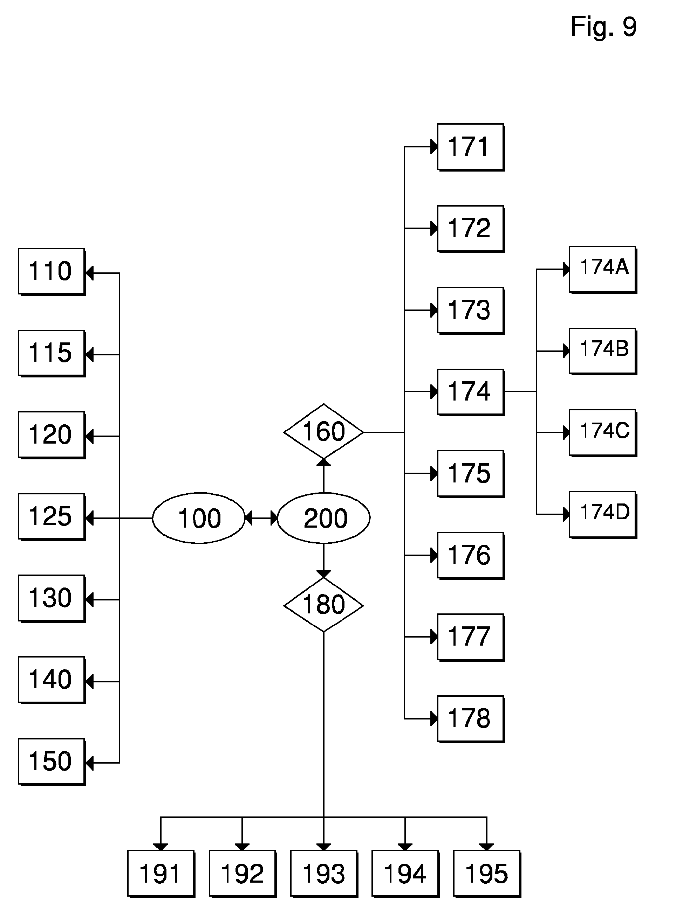

With reference to the block diagram in Figure 9, starting from the initial status 100, it is possible to active the following operating procedures by using keys 11 of the control panel 10:
- machine startup procedure 110;
- machine stopping procedure 115;
- automatic adjusting procedure 120 for adjusting a sanding thickness of elements 40 to be machined;
- adjusting manual procedure 125 for adjusting a sanding thickness of elements 40 to be machined;
- automatic adjusting procedure 130 for adjusting an advance speed of the conveying means 21;
- adjusting procedure 140 for adjusting the sanding means 23, 24, 25, 26 for modifying work settings and operating parameters of the latter;
- management procedure 150 for managing machining programmes executed by the machine during operation.

The startup procedures 110 and stopping procedures 115 for starting up and stopping the machine 20 are activated respectively by a first startup key 51 and a first stop key 52 of the control panel 10.

The machine 20 is screwed on the basis of the active programme in the memory in the processing means 2 and indicated by the respective display 102 in the main page 100W.

The automatic adjusting procedure 120 of a sanding thickness is managed by means of the first key group 90, which includes a first programming key 53, a second startup key 54, an increase key 55 and a decrease key 56. In particular, the procedure is activated by acting on the first programming key 53 that determines the display on the screen 13 of a thickness adjusting page 120W in which a real sanding thickness 121 is shown and a desired adjusting thickness 122 (Figure 8B).

By means of a first directional key 61 and a second directional key 62 of the sixth key group 95 it is respectively possible to increase or decrease the value of the adjusting thickness. The second startup key 54 enables the adjustment with the processing means 2 to be implemented that sends the new value to the machine 20.

In the adjusting manual procedure 125 of the sanding thickness it is sufficient to act on the increase key 55 and on the decrease key 56, respectively to increase and decrease the value of the sanding thickness.

The automatic adjusting procedure 130 of an advance speed of the conveying means 21 is managed by the second key group 91, which includes a second programming key 57, a third startup key 58, a second stop key 59 and a speed-selecting key 60.

The procedure is activated by acting on the second programming key 57 that determines the display on the screen 13 of a speed adjusting page 130W on which a current advance speed 131 and a desired adjusting advance speed 132 are shown (Figure 8C).

If the conveying means 21 is driven by an electric motor controlled by an inverter device, with the first directional key 61 and the second directional key 62 it is respectively possible to increase or decrease the value of the rotation speed of the motor. The third startup key 58 enables adjustment to be activated. The second stop key 59 enables the advance of the conveying means 21 to be arrested.

If the conveying means 21 has been driven by a two or multiple-speed electric motor, the third startup key 58 must be pressed to drive the motor and press the speed-selecting key 60 to select one of the available speeds. A respective lighted LED indicates the preselected value.

In the adjusting procedure 140 of the operating means or sanding units of the machine 20 the desired sanding means is selected by activating one of the keys for selecting the operating means 43, 44, 45, 46 of the third key group 92 of the switchboard 10, each of said keys being arranged below a respective figure of the card 16 showing sanding means.

Near each operating means 43, 44, 45, 46 selecting keys there is a first LED 71, a second LED 72 and a third LED 73 of different colours, the lighting up of which indicates respectively that the sanding means has been selected, that a corresponding driving motor is started up, that said sanding means intervenes on the element 40.

Selecting specific sanding means 23, 24, 25, 26 by means of a respective operating means 43, 44, 45, 46 selecting key determines the display on the screen 13 of an operating means 140W adjustment page that shows a plurality of operating parameters that are selectable by using a third directional key 63 and a fourth directional key 64 of the sixth key group 95. These keys enable a cursor displayed on the screen 13 to move. Once the cursor has been positioned on the desired parameter it is possible, by means of the first directional key 61 and the second directional key 62, to increase or decrease the value respectively.

With particular reference to Figure 8D, for each sanding means there is indicated on the operating means 140W adjusting page the presence of a roller and/or driving pad (display 141), a value of the speed of an abrasive belt of the sanding means (display 142), intervention anticipation and delay values of a roller and/or a pad of the sanding means on the element (display 143), number of buffers active laterally to the element (display 144).

The adjusting procedure 140 of the operating means is managed by the fourth key group 93, which includes a motor startup key 74, a speed adjusting key 75, a belt rotating key 76, a roller intervention key 77, a pad intervention key 78, a blowers intervention key 79, a fourth startup key 80 and a third stop key 81.

The driving motor of the selected sanding means is started up by means of the motor startup key 74. The speed adjusting key 75 enables a selection to be made between the various rotating speeds, for example three, of the motor.

The rotating direction, clockwise or anticlockwise, of the abrasive belt of the sanding means is selected by means of the belt rotating key 76.

The intervention mode (absent, manual, automatic) of the roller (if present) of the sanding means is selected with the roller intervention key 77. The successive pressure of the latter key in fact enables the intervention of the roller to be selectively deactivated, manual or continuous intervention to be obtained or to have the roller always lowered on the element 40 to be machined, lastly to have automatic or active intervention only in the presence of the element 40, with the roller that moves with respect to the latter with preset delay and anticipation values

Similarly, the pad intervention key 78 enables the intervention mode (absent, manual, automatic) of the pad (if present) of the sanding means on the element 40 to be selected.

The intervention mode of the blowing means 28 for cleaning the abrasive belt (intervention absent, manual or continuous, automatic or activated only in the presence of an element 40) is implemented by means of the blowers intervention key 79.

Activating the speed adjusting key 75, of the belt rotating key 76, of the roller intervention key 77, of the pad intervention key 78 causes the settings to be sent immediately to the sanding machine 20. Each of the aforesaid keys comprises respective LEDs that are suitable for indicating the selection made.

The fourth startup key 80 enables the motor of the selected sanding means to be started up. The third stop key 81 enables the operation of the latter to be arrested.

The fifth key group 94 comprises a plurality of programme selecting keys 82, for example four, which enable the management procedure of the work programmes 150 to be executed. This last procedure comprises loading into a memory of the processing means 2 a work programme of the machine 20 and/or saving a new work programme or a modified programme.

In the initial status 100 in which the machine is stationary, by pushing one of the programme selecting keys 82 a corresponding work programme is selected and loaded into the memory of the processing means 2. The selected programme is indicated on the main page 100W (display 102). If the machine 20 is in operation, loading of the selected work programme has to be confirmed and executed by pressing the first startup key 52.

By keeping one of the programme selecting keys 82 pressed for a given number of seconds, for example three, a work programme associated with said key is stored, said programme containing parameters and settings in use at that moment.

It is possible to access a configuration status 200 of the machine 20 by simultaneously pressing, for a defined number of seconds, the third directional key 63 and the fourth directional key 64. A configuration page 200W on the screen 13 corresponds to this configuration status 200.

In this configuration status 200, by means of the fourth directional key 64 it is possible to activate a general configuration procedure 160 to define parameters and settings closely linked to the structure and to the features of the machine 20, or a utility management procedure 180.

Configuration status 200, general configuration procedure 160 and utility management procedure 180 are structured in the graphic representation on the screen 13 in the shape of a menu and submenu arranged on different levels. Thus a configuration menu corresponds to the configuration status 200, this configuration menu contains two submenus: a general configuration menu, corresponding to the general configuration procedure 160, and a utility management menu, corresponding to the utility management procedure 180.

From the general configuration menu by means of the fourth directional key 64 it is possible to access a plurality of configuration submenus. In effect, the general configuration procedure 160 comprises a series of specific further configuration procedures that enable parameters and settings to be defined relating to the structure and features of the machine and the machinings to be performed. In particular, the general configuration procedure 160 comprises:
- a configuration procedure 171 of the machine;
- a configuration procedure 172 for configuring a machining thickness;
- a configuration procedure 173 for configuring the conveying means 21;
- a configuration procedure 174 for configuring the sanding means;
- a configuration procedure 175 for configuring the pressing means;
- a configuration procedure 176 for configuring the reading means;
- a configuration procedure 177 for configuring alarms/emergencies;
- a calibrating procedure 178 for setting the machining thickness.

The transition from one configuration submenu i.e. from one further configuration procedure to the other, is achieved by using the first directional key 61 and the second directional key 62. A desired configuration submenu can be selected by means of the fourth selection key 64. Within each configuration menu it is possible to select and modify parameters and settings or access further submenus.

On the screen 13 a configuration page 160W is displayed in which on the first line the selected configuration menu 161 is displayed and on the second line the name 162 and current value 163 of a parameter to be modified (Figure 8E) are displayed.

By means of the fourth selection key 64 it is possible to select each of the available parameters and by means of the first directional key 61 and the second directional key 62 it is possible to vary the values and/or the settings thereof.

The outlet key 65 enables the currently displayed menu to be exited and subsequent steps to be used to move to the initial status 100, i.e. to display the initial window 100W.

The configuration procedure 171 of the machine enables a plurality of general parameters of the machine to be defined and set. It is possible, for example, to configure the reading means 22, define the number of sanding means present in the machine 20, define the operational line type in which the machine 20 is inserted, etc.

The configuration procedure 172 of the machining thickness enables a plurality of values and adjustments to be set that are necessary to obtain machined elements having a set thickness. These parameters comprise, for example, permitted machining tolerance, maximum and minimum thickness value, clearance recovery value, etc.

Through the configuration procedure 173 of the conveying means the operating parameters of the latter are defined and set. It is thus possible, for example, to set the control type acting on the motor of the conveyor belt (with variable speed motor or with inverter), define the maximum and minimum values of the advance speed and of permitted tolerance, etc.

The configuration procedure 174 for configuring the sanding means is divided into the configuration procedures 174A, 174B, 174C, 174D, of the single sanding means, respectively the first 23, second 24, third 25, fourth 26. For each of the sanding means it is in particular possible to select the type of sanding means (transverse, longitudinal), type of motor (one, two, three-speed with inverter), maximum and minimum speed of the abrasive belt, enabling corresponding blowing means for cleaning the abrasive belt, alarms and emergencies, etc.

The configuration procedure 175 for configuring the pressing means 19 enables, for example, the presence or absence of the latter on the machine to be established, the startup time to be defined that is necessary for the motor of the device to reach full operational speed, closing time of a valve of the device before complete startup thereof, etc.

In the configuration procedure 176 for configuring the sectioned barrier reading means 22 it is possible to define and modify parameters and settings relating thereto. It is possible, for example, to define the barrier type (normal, centred, reduced), position of the first sensor of the barrier, number of sensors, space between sensors, etc.

The alarms configuration procedure 177 enables the corresponding alarms to be enabled for the operating means of the machine (e.g. emergency pushbutton, inverter, brake, etc).

The calibrating procedure 178 for calibrating the machining thickness enables the operating parameters of gauges to be defined and adjusted that are used for measuring the thickness of the element to be machined.

From the utility management menu 180 by means of the fourth directional key 64 it is possible to access a plurality of management submenus. The utility management procedure 180 in fact comprises a plurality of further specific management procedures that enable different operations and/or functions to be executed, for example:
- a reports management procedure 191 for generating a concise production report;
- a settings definition procedure 192 for defining general parameters, such as language and measurement units;
- a data transmission procedure 193 for transferring production data records, for example through a serial port of the processing means 2;
- a saving/loading procedure 194 (backup/restore) respectively for saving onto and loading from, a mass memory device (pen-drive) data relating to configuration parameters of the machine 20 and a current machining programme;
- an emptying procedure 195 to enable an element 40 being machined to exit even with the machine 20 in an alarm condition or without a set work programme.

The transition from a management submenu, i.e. from one further management procedure to the other is executed by using the first directional key 61 and the second directional key 62. A desired management submenu can be selected by means of the fourth selection key 64. Inside each management submenu it is possible to select and modify parameters and settings or access further submenus.

It is thus obvious that the control panel means 3 enables, through said keys and said screen 13, all the operating procedures to be selected and activated that are necessary for adjusting and/or configuring the machine 20 and managing the operation thereof, in addition to inserting and/or modifying operating parameters of said machine. These operations are executable by an operator via said control panel means 3 in an easy, intuitive and efficient manner.

### Block diagram legend (Figure 9)

- 100: initial status;
- 110: startup procedure;
- 115: stopping procedure;
- 120: automatic adjusting procedure for adjusting a sanding thickness;
- 125: manual adjusting procedure for adjusting a sanding thickness;
- 130: automatic adjusting procedure for adjusting an advance speed of conveying means;
- 140: adjusting procedure for adjusting sanding means;
- 150: management procedure for managing machining programmes;
- 200: configuration status;
- 160: general configuration procedure;
- 171: configuration procedure for configuring the machine;
- 172: configuration procedure for configuring a machining thickness;
- 173: configuration procedure for configuring conveying means;
- 174: configuration procedure for configuring sanding means;
- 174A: configuration procedure for configuring first sanding means 23;
- 174B: configuration procedure for configuring second sanding means 24;
- 174C: configuration procedure for configuring third sanding means 25;
- 174D: configuration procedure for configuring fourth sanding means 26;
- 175: configuration procedure for configuring pressing means;
- 176: configuration procedure for configuring reading means;
- 177: configuration procedure for configuring alarms/emergencies;
- 178: procedure for calibrating machining thickness;
- 180: utility management procedure;
- 191: production reports management procedure;
- 192: settings definition procedure and general parameters;
- 193: production records data transmission procedure;
- 194: saving/loading procedure for saving/loading configuration parameters for machine and current machining programme;
- 195: machine emptying procedure.

## Claims

1. Apparatus for managing and controlling an operating machine (20) for machining elements (40), in particular a sanding machine, comprising processing means (2) for driving and controlling said machine (2) and control panel means (3) for inserting and/or modifying and/or displaying data and/or operating parameters of said machine (20), **characterised in that** said control panel means (3) comprises supporting means (9) arranged for receiving and supporting said processing means (2).

2. Apparatus according to claim 1, wherein said control panel means (3) comprises switchboard means (10) provided with key means (11).

3. Apparatus according to claim 2, wherein said supporting means (9) is fixed to a rear side (10b) of said switchboard means (10) opposite a front side (10a) provided with said key means (11).

4. Apparatus according to claim 2 or 3, wherein said switchboard means (10) comprises a plurality of luminous indicators (12).

5. Apparatus according to any one of claims 2 to 4, wherein said control panel means (3) comprises display means (13) that is arranged for displaying said data and/or operating parameters and is housed in said switchboard means (10).

6. Apparatus according to any one of claims 2 to 5, comprising membrane means (14) suitable for covering at least said key means (11).

7. Apparatus according to claim 6, wherein said membrane means (14) comprises a film made of plastics, in particular polyester.

8. Apparatus according to claim 6 or 7, wherein said membrane means (14) includes pocket means (15) suitable for containing card means (16) comprising a set of figures (33, 34, 35, 36) schematically showing operating means (23, 24, 25, 26) of said machine (20).

9. Apparatus according to any one of claims 2 to 8, wherein said key means (11) is arranged on said keyboard means (10) such as to form a plurality of sets of keys (90, 91, 92, 93, 94, 95), each of said sets of keys being suitable for performing at least a respective adjusting and/or configuring procedure for adjusting and/or configuring said machine (20).

10. Apparatus according to claim 9, wherein said key means (11) comprises a first key group (90) for performing a procedure for adjusting a sanding thickness.

11. Apparatus according to claim 9 or 10, wherein said key means (11) comprises a second key group (91) for performing a procedure for adjusting an advance speed of conveying means (21) of said machine (20) for conveying an element (40).

12. Apparatus according to any one of claims 9 to 11, as claim 9 is appended to claim 8, wherein said key means (11) includes a third key group (92) comprising at least an operating means selecting key (43, 44, 45, 46) suitable for selecting respective operating means (23, 24, 25, 26) of said machine (20) for performing respective adjusting procedures.

13. Apparatus according to claim 12, wherein said card means (16) is positioned in said pocket means (15) so that each figure (33, 34, 35, 36) is almost superimposed on a respective operating means selecting key (43, 44, 45, 46) of said third key group (92).

14. Apparatus according to claim 13, wherein said key means (11) includes a fourth key group (93) arranged for performing adjusting procedures for adjusting said operating means (43, 44, 45, 46) selected by said operating means selecting keys (43, 44, 45, 46).

15. Apparatus according to any one of claims 9 to 14, wherein said key means (11) includes a fifth key group (94) for performing procedures for managing work programmes for the operation of said machine (20).

16. Apparatus according to any one of claims 9 to 15, wherein said key means (11) includes a sixth key group (95) for selecting and/or modifying data and/or operating parameters and/or for selecting and/or activating operating procedures.

17. Apparatus according to claim 16, wherein said sixth key group (95) comprises at least four directional keys (61, 62, 63, 64).

18. Apparatus according to any preceding claim, wherein said processing means (2) comprises electronic board means (4, 6, 7, 8) fixed to said supporting means (9).

19. Apparatus according to claim 18, wherein said supporting means (9) comprises seat means suitable for housing said electronic board means (4, 6, 7, 8).

20. Apparatus according to claim 18 or 19, wherein said electronic board means comprises a CPU supporting electronic board (4), arranged for supporting a central processing unit (5), and at least an electronic expansion board (6, 7, 8).

21. Apparatus according to claim 20, wherein said electronic board means comprises at least an I/O expansion board (6, 7) for the input and/or output of analogue and/or digital signals.

22. Apparatus according to claim 20 or 21, as claim 18 is appended to claim 5, wherein said electronic board means comprises at least a support expansion board (8) suitable for connecting said central processing unit (5) to said switchboard means (10) and to said display means (13).

23. Apparatus according to any one of claims 20 to 22, wherein said CPU supporting board (4) comprises connector means (15) for a connection to a removable reserve unit, in particular a "flash"-type mass memory unit.

24. Apparatus according to any one of claims 18 to 23, wherein said electronic board means (4, 6, 7, 8) comprises dismantleable protection panel means.

25. Method for managing and controlling an operating machine (20) for machining elements (40), in particular a sanding machine, by means of the control apparatus (1) according to any preceding claim, comprising inserting and/or exchanging with said operating machine (20) data and/or adjusting and/or operating parameters by means of said control apparatus (1) of said machine (20), said inserting and/or exchanging comprising executing operating procedures (110, 115, 120, 125, 130, 140, 150, 160, 180) that are activatable and/or manageable through key means (11) of control panel means (3) of said apparatus (1).

26. Method according to claim 25, wherein said executing said operating procedures (110, 115, 120, 125, 130, 140, 150, 160, 180) comprises activating respective key groups (90, 91, 92, 93, 94, 85) of said key means (11).

27. Method according to claim 25 or 26, further comprising displaying said data and/or operating parameters on display means (13) of said control panel means (3).

28. Method according to any one of claims 25 to 27, comprising activating said apparatus (1) and said machine (20) in an initial status (100) to execute an operating procedure chosen from a group comprising: startup procedure (110) of said machine; stopping procedure (115) of said machine; adjusting procedure (120, 125) of a sanding thickness of said elements (40) to be machined; automatic adjusting procedure (130) of an advance speed of conveying means (21) of said machine (20); adjusting procedure (140) of operational sanding means (23, 24, 25, 26) of said machine (20); management procedure (150) of machining programmes executed by said machine (20) during operation.

29. Method according to claim 28, wherein executing said startup procedure (110) and said stopping procedure (115) of said machine (20) comprises respectively activating a first startup key (51) and a first stop key (52) of said key means (11).

30. Method according to claim 28 or 29, as claim 28 is appended to claim 26, wherein said executing said adjusting procedure (120, 125) of a sanding thickness comprises activating a first key group (90).

31. Method according to any one of claims 28 to 30, as claim 28 is appended to claim 26, wherein said executing said automatic adjusting procedure (130) of an advance speed of conveying means (21) comprises activating a second key group (91).

32. Method according to any one of claims 28 to 31, as claim 28 is appended to claim 26, wherein executing said adjusting procedure (140) of sanding means (23, 24, 25, 26) of said machine (20) comprises selecting said sanding means (23, 24, 25, 26) and adjusting and/or calibrating operating parameters of said sanding means (23, 24, 25, 26).

33. Method according to claim 32, wherein said selecting said sanding means (23, 24, 25, 26) comprises activating a third key group (92).

34. Method according to claim 32 or 33, wherein said adjusting and/or calibrating comprises activating a fourth key group (93).

35. Method according to any one of claims 28 to 35, as claim 28 is appended to claim 26, wherein executing said management procedure (150) of machining programmes comprises activating a fifth key group (94).

36. Method according to any one of claims 25 to 35, wherein said executing said operating procedures (110, 115, 120, 125, 130, 140, 150, 160, 180) comprises inserting and/or modifying values and/or settings of said operating parameters.

37. Method according to claims 26 and 36, wherein said inserting and/or modifying values and/or settings comprises activating directional keys (61, 62, 63, 64, 65) of a sixth key group (94).

38. Method according to any one of claims 28 to 35, comprising leading said apparatus (1) and said machine (20) in a configuration status (200) to execute an operating procedure chosen from a group comprising: general configuration procedure (160) of said machine (20); utility management procedure (180).

39. Method according to claim 38, wherein said general configuration procedure (160) comprises a plurality of further configuration procedures (171, 172, 173, 174, 175, 176, 177, 178) suitable for defining parameters and/or settings of operating means (19, 21, 22, 23, 24, 25, 26) of said machine (20).

40. Method according to claim 39, wherein said further configuration procedures comprise: configuration procedure (171) of said machine; configuration procedure (172) of a machining thickness; configuration procedure (173) of said conveying means (21); configuration procedure (174) of operating sanding means (23, 24, 25, 26); configuration procedure (175) of aspirator means (19); configuration procedure (176) of reading means (22); configuration procedure (177) of alarms/emergencies; calibrating procedure (178) of a sanding thickness.

41. Method according to any one of claims 38 to 40, wherein said utility management procedure (180) comprises a plurality of further management procedures for executing different operations and functions.

42. Method according to claim 41, wherein said further management procedures comprise: management procedure reports (191) for generating a concise production report; settings definition procedure (192) for defining general parameters, in particular language and measurement units; data transmission procedure (193) for transferring production data records; saving and loading procedure (194) for saving onto, and loading from, a removable mass memory unit data and configuration parameters of said machine (20) and a machining programme in use; emptying procedure (195) to enable an element (40) being machined to exit said machine (20).

43. Method according to any one of claims 38 to 42, wherein said configuration procedures and/or said management procedures are displayed on said display means (13).

44. Method according to any one of claims 38 to 43, as claim 38 is appended to claim 37, wherein said configuration procedures and/or said management procedures are selectable and/or activatable by means of said directional keys (61, 62, 63, 64, 65).

45. Programme comprising a code for implementing the method according to claims 25 to 44, when the programme is executed by a computer system.

46. Support readable by a computer and that carries a programme defined in claim 45.
